# EUROPEAN PATENT SPECIFICATION

(11) **EP 3 789 802 B1**
(45) Date of publication and mention of the grant of the patent: **23.10.2024**
(21) Application number: 20192816.5
(22) Date of filing: 26.08.2020
(51) Int. Cl.: G02B 6/38

(54) **ADAPTER DEVICE FOR FIBER OPTICAL CONNECTIONS**
ADAPTERVORRICHTUNG FÜR FASEROPTISCHE VERBINDUNGEN
DISPOSITIF D'ADAPTATEUR POUR CONNEXIONS DE FIBRE OPTIQUE

(30) Priority: 09.09.2019 IT 201900015872
(43) Date of publication of application: 10.03.2021
(73) Proprietor: F.A.I.T. FABBRICA APPARECCHIATURE PER IMPIANTI DI TELECOMUNICAZIONE - SOCIETA' A RESPONSABILITA' LIMITATA, 00135 Roma (RM) (IT)
(72) Inventor: PUGLIESE, Giovanni, 00186 Roma (IT); VENTRELLA, Alfredo, 00186 Roma (IT)
(74) Representative: Santi, Filippo

(56) References cited:
- EP-A1- 1 341 015
- JP-A- 2001 013 365
- KR-A- 20070 035 515
- US-A1- 2002 081 076
- US-A1- 2005 058 402
- US-A1- 2014 023 322

## Description

### Technical field of the invention

The present invention relates to an adaptor device for optical fiber connections, in particular a female to female adaptor configured to house at least one male optical connector.

### State of the art

Optical fiber data transfer systems are continuously increasing all over the world.

These systems provide for data transmission using coherent light signals transmitted through optical fiber cables, which include a central optical fiber in glass or plastic material, suitable for transmitting the light signal, an internal protective nylon sheath, Kevlar fibers in order to reinforce the cable, increasing its tensile strength and an outer sheath in plastic or rubber.

The connections between terminations of optical fiber cables are to be made with great precision to allow the passage of the light signal from one optical fiber to another with the least possible dispersion.

In normal use, optical fiber cables are provided at the terminal ends with standard male connectors, so that two cables can be mutually joined by means of a female to female connection element. These connectors put into direct contact the ends of two fibers by exerting a force, which tends to keep said ends mutually joined.

Optical fibers can be of different types, generally single-mode or multi-mode, depending on the signal bandwidth to be transmitted and the length of the optical connection.

Optical fiber connectors can also be of different types, for example SC or LC or FC or ST or MU or others, depending on the application in which they are to be used.

Each of these types of connectors has its own specific mechanical interface, both for connecting the male optical connector to its female adaptor, and for assembling the female adaptor, or female to female adaptor, on a mechanical support system (for example on a socket box, on a permutation panel, frame, front panel, wall stud or similar).

The SC and LC connectors, in particular, use female to female adaptors that lock onto the relative supports, or through lateral lugs that fit into appropriate compartments, or through screws that screw into specific holes, or through elastic metal tabs that fit together in special compartments.

The type of FC connectors, on the other hand, can alternatively provide an external thread and an abutment on the body of the female to female adaptor, a body which, after passing through a hole in the attachment wall, locks to it by means of a threaded nut.

The known type adaptor devices are generally suitable for use in technical and professional fields, with workers that are experienced in the field and in the specific use, with systems normally carried out in technical environments on specific professional supports. With the diffusion of fiber optic systems in the consumer and non-professional market, the access and use of these systems has expanded to non-technical users, which are not specifically prepared for proper management and maintenance. This leads to an increase in the possibility of malfunctions or damage to devices and to users themselves, due to incorrect use of optical equipment.

Furthermore, even the installation of such systems is often carried out in non-professional and non-specialized environments, where usually the supports typically used in professional premises are not used, but wall boxes, support frames and socket boxes commonly used in civil series on the market are used.

An example of domestic installation, and fiber diffusion in houses and offices, is based on FTTH (Fiber To The Home) technology, where SC type connectors are generally used. In particular, in this case at least one network socket, or wall socket module, is provided in the reference environment of the end user, with a female to female adaptor, and a connectorized fiber optic cable.

Known type female to female adaptors are inserted inside the network socket, or the socket module, by means of coupling elements configured to allow a shape coupling and / or a locking of the female to female adaptor inside the socket housing or wall socket module. In particular, the coupling elements are positioned, during assembly, on the external casing of the female to female adaptor to modify the external geometry of the adaptor and make it dimensionally compatible with the dimensions of the housing provided on the socket or socket module wall.

Once the female to female adaptor and the respective coupling element have been assembled, the respective preconnectorized fiber optic cables can be inserted in the housing of the socket or socket module, and in particular the preconnectorized cable on the user side can be conveniently connected and disconnected.

A disadvantage of the known female to female adaptors is that, in order to be inserted into the pre-existing studs or wall modules, they require suitably shaped coupling elements.

Furthermore, the positioning of the coupling elements requires the intervention of skilled workers, resulting in high times and costs.

An incorrect assembly, in fact, can lead to a misalignment between the fibers, the lack of optical connection between the fibers, or in the worst cases an incorrect interference between the components in contact, which can cause the breakage of the components, mainly made of plastic material.

Furthermore, the fact that the optical connections will often be installed in residential houses means that for aesthetic reasons there will be a tendency not to use studs or external wall boxes, but to use sockets compatible with the series of civil sockets, typically recessed, used in the specific house. In this case, the female to female adaptor must be assembled in a socket box in a substantially orthogonal position to the wall where the wall box is fixed. In this case, the considerable encumbrance generated by the length of the adaptor and the optical connectors, both input and output, inserted into it creates a problem in many installations.

The encumbrance problem is important both on the system side, inside the wall box, which is generally not very deep and therefore does not have sufficient space for an optimal bending of the optical fiber, and on the user side, when to the wall on which the optical socket is installed, furniture or furnishing accessories, which could damage both the optical connector and the optical fiber on the user side, must be juxtaposed.

Documents US 2014/0023322, JP 2001014465, US 2002/081076, EP 1341015 and US 2005/0058402 are representative of the available art.

### Summary of the invention

Therefore, the technical problem posed and solved by the present invention is that of providing a female to female adaptor device compatible with one of the various optical standards currently in use (for example SC, LC, FC), which allows to overcome the aforementioned drawbacks with reference to the prior art.

This problem is solved by an adaptor device according to claim 1.

Preferred features of the present invention are present in the dependent claims.

The present invention provides some relevant advantages.

In particular, the characteristic of providing a specific casing I for the optical sleeve, configured to constrain it with respect to the socket box, and a release locking tab, to retain the device in the socket box in a releasable way, allows to eliminate the use of additional coupling elements for mounting the female to female adaptor into the socket box and thus facilitate the mounting of the adaptor device.

Furthermore, advantageously, the user does not need specific skills during the assembly phase.

The female to female adaptor according to the present invention can in fact be inserted inside the wall socket box in a univocal way, making it possible to assemble it even by unskilled workers.

A further advantage is that the female to female adaptor device according to the present invention allows protection for the optical cable on the user side, preventing undesirable warping or bending of the fiber, in particular in the connection area with the wall socket box.

Other advantages, characteristics and methods of use of the present invention will become evident from the following detailed description of some embodiments, presented as of non-limiting example.

### Brief description of the figures

Reference will be made to the figures of the attached drawings, in which:
Figure 1 shows a front and sectional view of a socket box of a known type;
Figure 2 shows a perspective view of a first embodiment of the adaptor device according to the present invention in a configuration of alignment with a socket box of a known type;
Figure 3 shows a perspective view of a second embodiment of the adaptor device according to the present invention in a configuration of alignment with a socket box of a known type;
Figure 4 shows a rear perspective view of the device of Figure 3;
Figure 5 shows a front view of the device of Figure 3;
Figure 6 shows a side view of the device of Figure 3;
Figure 7 shows a rear perspective view of the adaptor device of Figure 3 in a configuration of insertion into a socket box of a known type;
Figure 8 shows a front view of Figure 7;
Figure 9 shows a partially sectioned view of Figure 8;
Figure 10 shows a front perspective view of Figure 7;
Figure 11 shows a perspective view of a third embodiment of the device according to the invention in a configuration of insertion into a socket box of a known type;
Figure 12 shows a perspective view of a fourth embodiment of the device according to the invention in a configuration of insertion into a socket box of known type.

In the different figures, similar parts will be indicated with the same numerical references.

### Detailed description of preferred embodiments.

With reference to the figures, a female to female adaptor device for optical fiber connections according to a first preferred embodiment of the invention is generally denoted with 100.

The female to female adaptor device 100 of the present example is configured to be mounted in a socket box P, in particular a wall socket box P.

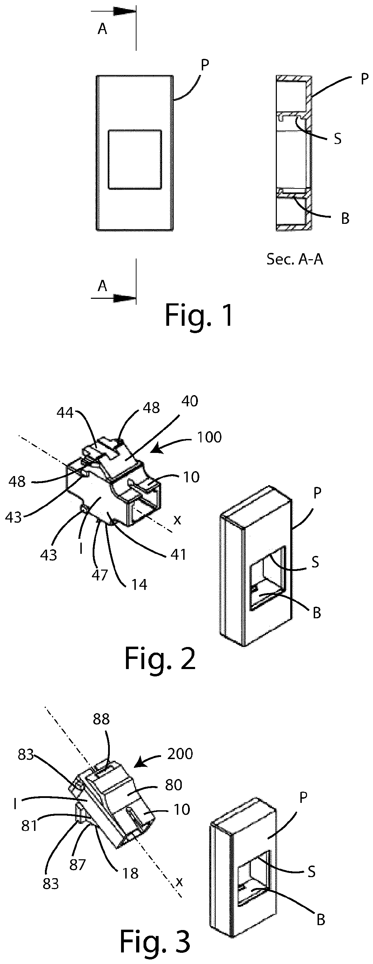

As shown in Figure 2, the adaptor device 100 comprises an optical sleeve 10 having an outer casing I, in particular substantially box-like, defining a housing for at least two optical connectors.

The optical sleeve is configured, for example as an oblong element, parallelepidic shaped in the case of standard type SC, LC or MU, or tubular in the case of standard FC, in such a way as to allow an optical connection between the two connectors along an axis substantially parallel to a main extension axis X of the sleeve.

In the example described, the optical sleeve 10 is an SC type adaptor.

As shown in Figure 2, the device 100 comprises interference means 41, 43, 47, 48 configured to constrain the optical sleeve 10 with respect to the socket box P, when the device 100 is inserted into the socket box P, and to allow a movement of the optical sleeve 10 with respect to the socket box P, during the inserting or disconnecting phases of the adaptor device 100 in/from the socket box P. Advantageously, the optical sleeve 10 has a release locking tab 40, made on an external surface of the casing I configured to releasably retain the device 100 in the socket box P.

In particular, in the preferred embodiments of the described invention, the release locking tab 40 is made on an upper face of the casing I.

Preferably, the adaptor device 100 has a protuberance 41 at a lower face of the casing I.

As shown in Figure 2, the protuberance 41 has a base surface 14, substantially planar, shaped to be abutting positioned, or positionable, with respect to a supporting base B of the socket box P.

In the first embodiment, the device 100 according to the present invention has a base surface 14 substantially coplanar with the lower face of the casing I.

Advantageously, therefore, the insertion of the device 100 inside a wall socket box P can be done easily and without the use of any additional element to be positioned during the assembly phase.

In order to facilitate its disengagement from the housing of the socket box P, the device 100 comprises a track 44, made on an upper surface of the release locking tab 40, as shown in Figure 2. In particular, the track 44 works as a guide for an unlocking tool.

A socket box P of the known type, in particular a socket box of the Keystone type, is shown in the attached figures as an example of a possible housing for the female to female adaptor device according to the present invention.

The positioning and sizing of the interference means of the adaptor device according to the invention are meant as related to the specific type of socket box P to which the device itself must be connected.

In this example, the device 100 has an upper abutment edge 48, made at the release locking tab 40, configured to abut on an upper portion S of the housing provided in the socket box P.

Advantageously, the device 100 also has at least one lateral abutment tooth 43, made at a lateral wall of the casing I and/or of the protuberance 41, configured to abut against a lateral portion L of the housing provided in the socket box P.

In addition, the device 100 comprises a lower abutment edge 47, made at the base surface 14 of the protuberance 41, configured to abut on a portion of the supporting base B of the housing provided in the socket box P.

Advantageously, therefore, once inserted in the socket box P, the device 100 is constrained, with respect to the box itself, both laterally and longitudinally.

The female to female adaptor device according to a second preferred embodiment of the present invention is generally denoted with 200 and is shown in Figures 3 to 10.

As shown in Figure 3, the device 200 comprises interference means 81, 83, 87, 88 configured to constrain the optical sleeve 10 with respect to the socket box P, when the device 200 is inserted into the socket box P, and to allow a movement of the optical sleeve 10 with respect to the socket box P, during the inserting or disconnecting phases of the adaptor device 200 in/from the socket box P.

Advantageously, in the second embodiment, the optical sleeve 10 has a release locking tab 80, made on an external surface of the casing I configured to releasably retain the device 200 in the socket box P.

In particular, the release locking tab 80 is made on an upper face of the casing I.

Preferably, the adaptor device 200 has a protuberance 81 at a lower face of the casing I.

As shown in Figure 3, the protuberance 81 has a base surface 18, substantially planar, shaped to be positioned or abutting-positionable to a supporting base B of the socket box P.

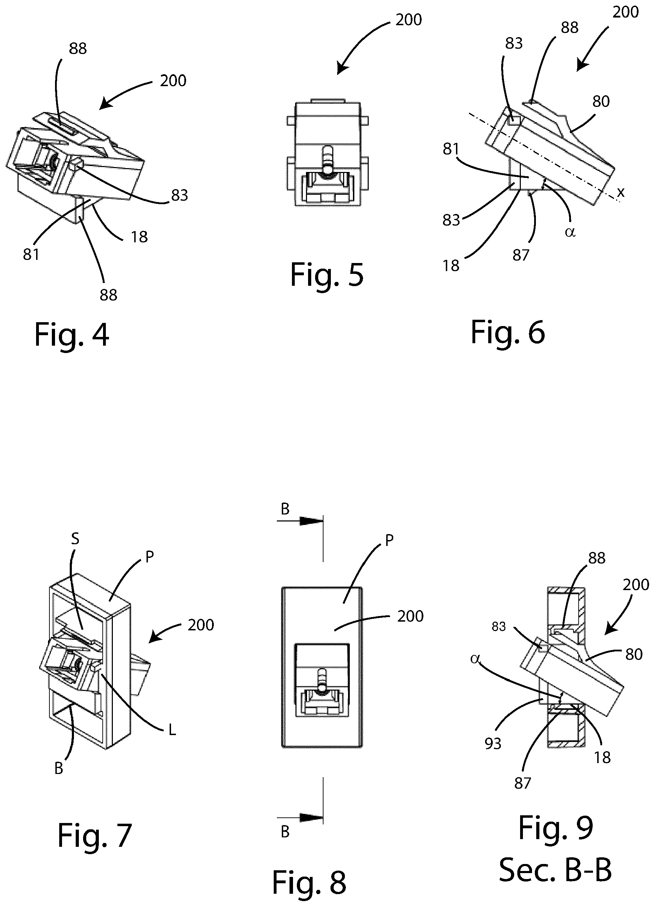

Advantageously, the base surface 18 is substantially sloping with respect to the lower face of the casing I. As shown in Figures 6 and 9, the inclination of the base surface 18 with respect to the lower face of the casing I is equal to an angle α.

Preferably, the angle α is between 0°-60°. In particular, a good compromise between the convenience of the user for inserting/ disconnecting the network cable in/from the socket box, and reducing the encumbrance on the user side, is achieved at an inclination angle α equal to 40°.

As shown in Figure 3, the device 200 has an upper abutment edge 88 made at the release locking tab 80 configured to abut against an upper portion S of the housing provided in the socket box P.

Advantageously, the device 200 also has at least one lateral abutment tooth 83, made at a lateral wall of the casing I and / or the protuberance 81, configured to abut against a lateral portion L of the housing provided in the socket box P (portion shown in Figure 7).

In addition, the device 200 comprises a lower abutment edge 87, made at the base surface 18 of the protuberance 81, configured to abut against a portion of the supporting base B of the housing provided in the socket box P.

Advantageously, therefore, once inserted into the socket box P, the device 200 is constrained, with respect to the box, both laterally and longitudinally.

In the preferred embodiments here described, the optical module 10 comprises a longitudinal reference slot A at an insertion portion of the male connector.

In particular, the slot A is sized to guide a coaxial insertion of the male connector into the sleeve 10.

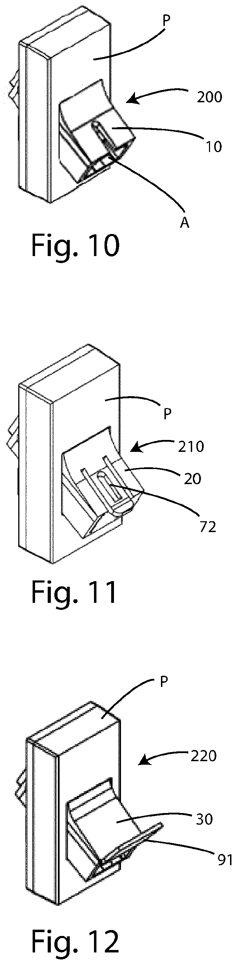

As shown in Figure 10, in an insertion configuration in the socket box P, the device 200 allows a connection of a network cable on the user side according to an inclination angle α, which reduces the encumbrance and avoids the possibility of unwanted warping or bending of the fiber, in particular in the connection area with the wall socket box.

Alternative embodiments of the device according to the present invention can provide different conformations of the optical sleeve, in particular about the conformation of the user-side receiving housing.

For example, Figure 11 shows a female to female adaptor device 210, according to a third embodiment of the present invention, in which the optical sleeve 20 comprises controlled release locking means 72, at an insertion portion of the male connector, configured to constrain a longitudinal sliding of the male connector with respect to the sleeve 20.

Figure 12 shows a female to female adaptor device 220, according to a fourth embodiment of the present invention, in which the optical sleeve 30 comprises at least one tilting closing element 91 at an insertion portion of the male connector.

Advantageously, the object according to the present invention allows eliminating the use of additional coupling elements for the assembly of the female to female adaptor in the socket box, facilitating its assembly and making it possible even for unskilled workers.

The present invention has been described with reference to preferred embodiments. It is to be understood that there may be other embodiments that refer to the same inventive core, as defined by the scope of protection of the claims set out below.

## Claims

1. Female to female adaptor device (200; 210; 220) for a fiber optic connection, configured to be set into a socket box (P), the adaptor device (200; 210; 220) comprising:
- an optical sleeve (10; 20; 30), having an outer casing (I) defining a housing for at least two optical connectors, configured to allow an optical connection between the two connectors along an axis substantially parallel to a main extension axis (X) of the sleeve,
- interference means (81; 83; 87; 88) configured to constrain said optical sleeve (10; 20; 30) with respect to the socket box (P), when the device (200 ; 210; 220) is inserted into the socket box (P), and to allow a handling of the optical sleeve (10; 20; 30) with respect to the socket box (P), during the insertion or removal steps of the adaptor device (200; 210; 220) in/from the socket box (P),
wherein said optical sleeve (10; 20; 30) has a release locking tab (80), made on an outer surface of said casing (I) configured to releasably retain said device (200; 210; 220) into the socket box (P), said adaptor device (200; 210; 220) wherein said interference means comprises
a protrusion (81) at a lower face of said casing (I), said protrusion (81) having a base surface (18), substantially planar, shaped to be positioned or positionable in abutment with respect to a supporting base (B) of the socket box (P), wherein said base surface (18) is substantially sloping with respect to said lower face of said casing (I), said slope being equal to an angle (α); **characterized by**
an upper abutment edge (88), made at said release locking tab (80), configured to abut against an upper portion (S) of the housing provided into the socket box (P).

2. Adaptor device (200; 210; 220) according to the preceding claim, wherein said release locking tab (80) is made on an upper face of said casing (I).

3. Adaptor device (200; 210; 220) according to any one of the preceding claim, wherein said angle (α) is comprised between 0°- 60°, optionally being equal to 40°.

4. Adaptor device (200; 210; 220) according to one of the preceding claims, wherein said interference means comprises a lower abutment edge (87), made at said base surface (18) of said protrusion (81), configured to abut against a portion of the supporting base (B) of the housing provided in the socket box (P).

5. Adaptor device (200; 210; 220) according to one of the preceding claims, wherein said interference means comprises at least one lateral abutment tooth (83), made at a side wall of said casing (I) and/or of said protrusion (81), configured to abut against a side portion (L) of the housing provided into the socket box (P).

6. Adaptor device (200) according to any one of the preceding claims, wherein said optical sleeve (10) comprises a longitudinal reference slot (A) at an insertion portion of the male connector, said slot (A) being sized to guide a coaxial insertion of the male connector into the sleeve (10).

7. Adaptor device (210) according to any one of the preceding claims, wherein said optical sleeve (20) comprises controlled release locking means (72), at an insertion portion of the male connector, configured to constrain a longitudinal sliding of the male connector with respect to the sleeve (20).

8. Adaptor device (220) according to any one of the claims from 1 to 5, wherein said optical sleeve (30) comprises at least one pivoting closing element (91) at an insertion portion of the male connector.

## Patentansprüche

1. Buchse-zu-Buchse-Adaptervorrichtung (200; 210; 220) für eine faseroptische Verbindung, die so konfiguriert ist, dass sie in eine Steckdose (P) eingesetzt werden kann, wobei die Adaptervorrichtung (200; 210; 220) umfasst:
- eine optische Muffe (10; 20; 30) mit einem Außengehäuse (I), das eine Aufnahme für mindestens zwei optische Verbinder definiert, die so konfiguriert ist, dass sie eine optische Verbindung zwischen den beiden Verbindern entlang einer Achse ermöglicht, die im Wesentlichen parallel zu einer Haupterstreckungsachse (X) der Muffe verläuft,
- interferenzmittel (81; 83; 87; 88), die so konfiguriert sind, dass sie die optische Hülse (10; 20; 30) in Bezug auf das Buchsengehäuse (P) einschränken, wenn die Vorrichtung (200; 210; 220) in das Buchsengehäuse (P) eingeführt wird, und dass sie eine Handhabung der optischen Hülse (10; 20; 30) in Bezug auf das Buchsengehäuse (P) während der Schritte des Einführens oder Entfernens der Adaptervorrichtung (200; 210; 220) in/aus dem Buchsengehäuse (P) ermöglichen,
wobei die optische Hülse (10; 20; 30) eine Freigabeverriegelungslasche (80) aufweist, die an einer Außenfläche des Gehäuses (I) ausgebildet ist, die so konfiguriert ist, dass sie die Vorrichtung (200; 210; 220) lösbar in dem Buchsenkasten (P) festhält, wobei die Adaptervorrichtung (200; 210; 220) wobei das Interferenzmittel Folgendes umfasst einen Vorsprung (81) an einer unteren Fläche des Gehäuses (I), wobei der Vorsprung (81) eine Basisfläche (18) aufweist, die im Wesentlichen planar ist und so geformt ist, dass sie in Bezug auf eine tragende Basis (B) des Steckdosengehäuses (P) in Anlage positioniert oder positionierbar ist, wobei die Basisfläche (18) in Bezug auf die untere Fläche des Gehäuses (I) im Wesentlichen geneigt ist, wobei die Neigung gleich einem Winkel (α) ist; **gekennzeichnet durch** eine obere Anschlagskante (88), die an der Freigabeverriegelungslasche (80) ausgebildet ist, die so konfiguriert ist, dass sie an einem oberen Abschnitt (S) des Gehäuses anliegt, das in dem Steckdosengehäuse (P) vorgesehen ist.

2. Adaptervorrichtung (200; 210; 220) nach dem vorhergehenden Anspruch, wobei die Freigabeverriegelungslasche (80) an einer oberen Fläche des Gehäuses (I) ausgebildet ist.

3. Adaptervorrichtung (200; 210; 220) nach einem der vorhergehenden Ansprüche, wobei der Winkel (α) zwischen 0° - 60° liegt und optional gleich 40° ist.

4. Adaptervorrichtung (200; 210; 220) nach einem der vorangehenden Ansprüche, wobei das Eingriffsmittel eine untere Anschlagkante (87) umfasst, die an der Basisfläche (18) des Vorsprungs (81) ausgebildet ist und so konfiguriert ist, dass sie an einem Abschnitt der tragenden Basis (B) des Gehäuses anliegt, das in der Steckdose (P) vorgesehen ist.

5. Adaptervorrichtung (200; 210; 220) nach einem der vorhergehenden Ansprüche, wobei das Eingriffsmittel mindestens einen seitlichen Anschlagzahn (83) umfasst, der an einer Seitenwand des Gehäuses (I) und/oder des Vorsprungs (81) ausgebildet ist und so konfiguriert ist, dass er an einem Seitenabschnitt (L) des in der Steckdosenbox (P) vorgesehenen Gehäuses anliegt.

6. Adaptervorrichtung (200) nach einem der vorhergehenden Ansprüche, wobei die optische Hülse (10) einen Längsbezugsschlitz (A) an einem Einführungsabschnitt des Steckers aufweist, wobei der Schlitz (A) so bemessen ist, dass er ein koaxiales Einführen des Steckers in die Hülse (10) führt.

7. Adaptervorrichtung (210) nach einem der vorhergehenden Ansprüche, wobei die optische Hülse (20) eine Verriegelungseinrichtung (72) mit kontrollierter Freigabe an einem Einführungsabschnitt des männlichen Verbinders umfasst, die so konfiguriert ist, dass sie eine Längsverschiebung des männlichen Verbinders in Bezug auf die Hülse (20) einschränkt.

8. Adaptervorrichtung (220) nach einem der Ansprüche 1 bis 5, wobei die optische Hülse (30) mindestens ein schwenkbares Verschlusselement (91) an einem Einführungsabschnitt des männlichen Steckers umfasst.

## Revendications

1. Dispositif adaptateur femelle-femelle (200; 210; 220) pour une connexion en fibre optique, configuré pour être mis en place dans un boîtier de prise (P), le dispositif adaptateur (200; 210; 220) comprenant:
- un manchon optique (10; 20; 30), ayant une enveloppe extérieure (I) définissant un logement pour au moins deux connecteurs optiques, configuré pour permettre une connexion optique entre les deux connecteurs le long d'un axe sensiblement parallèle à un axe principal d'extension (X) du manchon,
- des moyens d'interférence (81; 83; 87; 88) configurés pour contraindre ledit manchon optique (10; 20; 30) par rapport au boîtier de prise (P), lorsque le dispositif (200; 210; 220) est inséré dans le boîtier de prise (P), et pour permettre une manipulation du manchon optique (10; 20; 30) par rapport au boîtier de prise (P), pendant les étapes d'insertion ou de retrait du dispositif adaptateur (200; 210; 220) dans/depuis le boîtier de prise (P),
dans lequel ledit manchon optique (10; 20; 30) comporte une languette de verrouillage de libération (80), réalisée sur une surface extérieure dudit boîtier (I) configurée pour retenir de manière libérable ledit dispositif (200; 210; 220) dans le boîtier de prise (P), ledit dispositif adaptateur (200; 210; 220) dans lequel ledit moyen d'interférence comprend une saillie (81) sur une face inférieure dudit boîtier (I), ladite saillie (81) ayant une surface de base (18), sensiblement plane, formée pour être positionnée ou positionnable en butée par rapport à un socle de support (B) du boîtier de prise (P), dans laquelle ladite surface de base (18) est sensiblement inclinée par rapport à ladite face inférieure dudit boîtier (I), ladite inclinaison étant égale à un angle (α); **caractérisé par** un bord de butée supérieur (88), réalisé au niveau de ladite languette de verrouillage (80), configuré pour venir en butée contre une partie supérieure (S) du logement prévu dans le boîtier de prise (P).

2. Dispositif adaptateur (200; 210; 220) selon la revendication précédente, dans lequel ladite languette de verrouillage (80) est réalisée sur une face supérieure dudit boîtier (I).

3. Dispositif adaptateur (200; 210; 220) selon l'une quelconque des revendications précédentes, dans lequel ledit angle (α) est compris entre 0°-60°, étant éventuellement égal à 40°.

4. Dispositif adaptateur (200; 210; 220) selon l'une quelconque des revendications précédentes, dans lequel ledit moyen d'interférence comprend un bord de butée inférieur (87), réalisé au niveau de ladite surface de base (18) de ladite protubérance (81), configuré pour venir en butée contre une partie de la base de support (B) du boîtier prévu dans la boîte à douilles (P).

5. Dispositif adaptateur (200; 210; 220) selon l'une quelconque des revendications précédentes, dans lequel ledit moyen d'interférence comprend au moins une dent de butée latérale (83), réalisée au niveau d'une paroi latérale dudit boîtier (I) et/ou de ladite protubérance (81), configurée pour venir en butée contre une partie latérale (L) du boîtier prévu dans le socle de prise de courant (P).

6. Dispositif adaptateur (200) selon l'une quelconque des revendications précédentes, dans lequel ledit manchon optique (10) comprend une fente de référence longitudinale (A) au niveau d'une partie d'insertion du connecteur mâle, ladite fente (A) étant dimensionnée pour guider une insertion coaxiale du connecteur mâle dans le manchon (10).

7. Dispositif adaptateur (210) selon l'une quelconque des revendications précédentes, dans lequel ledit manchon optique (20) comprend un moyen de verrouillage à libération contrôlée (72), au niveau d'une partie d'insertion du connecteur mâle, configuré pour contraindre un glissement longitudinal du connecteur mâle par rapport au manchon (20).

8. Dispositif adaptateur (220) selon l'une quelconque des revendications 1 à 5, dans lequel ledit manchon optique (30) comprend au moins un élément de fermeture pivotant (91) au niveau d'une partie d'insertion du connecteur mâle.
